# DEMANDE DE BREVET EUROPEEN

(11) **EP 1 408 592 A1**
(43) Date de publication de la demande: **14.04.2004**
(21) Numéro de dépôt: 03360116.2
(22) Date de dépôt: 09.10.2003
(51) Int. Cl.: H02G 3/06

(54) **Goulotte pourvue d'au moins un moyen de continuité des séparations au niveau des jonctions droites ou angulaires**

(30) Priorité: 10.10.2002 FR 0212610
(71) Demandeur: Tehalit GmbH & Co. KG, 67716 Heltersberg (DE)
(72) Inventeur: Schnurr, Richard, 66957 Vinningen (DE)
(74) Mandataire: Nuss, Pierre

(57) **Abrégé**

La présente invention concerne une goulotte (1) présentant une section transversale générale en forme de U plus ou moins aplatie et pourvue d'au moins un moyen de séparation longitudinale et/ou d'un dispositif de guidage pour le clouage (5).

Goulotte caractérisée en ce qu'elle est pourvue d'au moins un moyen de continuité au niveau des jonctions droites ou angulaires coopérant avec le dispositif de guidage our le clouage (5).

L'invention est plus particulièrement applicable dans le domaine des installations électriques, en particulier des dispositifs de distribution électrique et notamment des goulottes d'alimentation électrique.

## Description

La présente invention concerne le domaine des installations électriques, en particulier des dispositifs de distribution électrique et notamment des goulottes d'alimentation électrique et a pour objet une goulotte pourvue d'au moins un moyen de continuité des séparations au niveau des jonctions droites ou angulaires.

Il existe actuellement de nombreuses goulottes d'alimentation électrique destinées à la distribution d'énergie électrique, ainsi qu'à la connexion de moyens informatiques et qui sont constituées sous forme de canalisations munies sur leur face frontale d'une ouverture longitudinale pour la mise en place des conducteurs et le montage d'appareillages électriques sous forme de prises, d'interrupteurs ou autres, qui sont fixés dans lesdites goulottes par l'intermédiaire de pattes élastiques munies de dispositifs d'accrochage coopérant avec la partie inférieure de l'ouverture délimitée entre les bords correspondants desdites goulottes.

Cette ouverture des goulottes correspond à un intervalle longitudinal nécessaire pour la mise en place de différents câblages et est fermée au moyen d'un couvercle spécifique à chaque goulotte, ce couvercle réalisant simultanément le maintien en écartement des bords des goulottes. La fixation des goulottes sur leur support est effectuée par vissage de leur fond sur les supports ou encore par clouage avec guidage des clous au moyen de rails spécifiques.

Les différents conducteurs électriques sont généralement disposés dans les goulottes avec prévision d'une ou de plusieurs séparations longitudinales. Ces séparations sont destinées à permettre une distinction aisée de différents circuits et, ainsi, à faciliter les interventions des installateurs. Il est connu de pourvoir, à cet effet, les goulottes de cloisons fixes ou montées dans leur fond de manière amovible par l'intermédiaire de dispositifs de fixation correspondants.

Ainsi, les goulottes existantes permettent généralement de répondre aux besoins en matière de séparation des circuits. Cependant, ces goulottes connues ne présentent aucun moyen permettant de faciliter leur alignement lors de la réalisation de longueurs importantes de canalisation constituées par plusieurs goulottes mises bout à bout, de sorte qu'elles nécessitent la mise en oeuvre d'éléments de maintien provisoire ou la présence d'au moins deux opérateurs pour leur pose. Par ailleurs, ces goulottes connues doivent toujours être complétées par des moyens accessoires pour la réalisation de changements de direction.

La présente invention a pour but de pallier ces inconvénients en proposant une goulotte permettant de faciliter un assemblage bout à bout droit ou angulaire, tout en garantissant une parfaite séparation entre les compartiments de la goulotte.

A cet effet, la goulotte, qui présente une section transversale en U et qui est munie d'au moins un moyen de séparation longitudinale et/ou d'un dispositif de guidage pour le clouage, est caractérisée en ce qu'elle est pourvue d'au moins un moyen de continuité au niveau des jonctions droites ou angulaires coopérant avec le dispositif de guidage pour le clouage 5.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en perspective représentant une goulotte conforme à l'invention montée sur un angle sortant ;
la figure 2 est une vue analogue à celle de la figure 1 d'une goulotte montée dans un angle rentrant ;
la figure 3 est une vue en perspective analogue à celle de la figure 1, dans laquelle une goulotte est montée à plat devant un angle sortant ;
la figure 4 est une vue en perspective d'une variante de réalisation d'une goulotte suivant les figures 1 à 3, et
la figure 5 représente, en perspective, une autre variante de réalisation de la pièce de continuité.

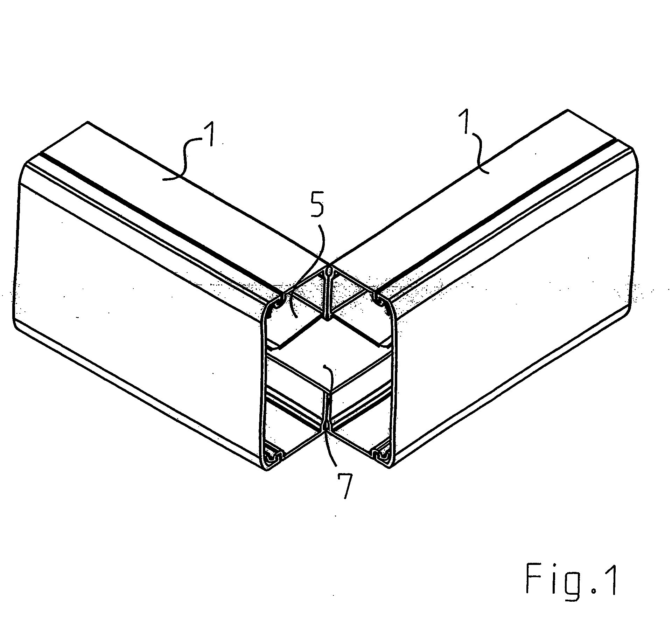

Les figures 1 à 4 des dessins annexés représentent différentes formes de goulottes 1 présentant une section transversale générale en forme de U plus ou moins aplatie, ces goulottes 1 étant pourvues d'au moins un moyen de séparation longitudinale et/ou d'un dispositif de guidage pour le clouage 5.

Conformément à l'invention, ces goulottes 1 sont pourvues d'au moins un moyen de continuité au niveau des jonctions droites ou angulaires coopérant avec le dispositif de guidage pour le clouage 5.

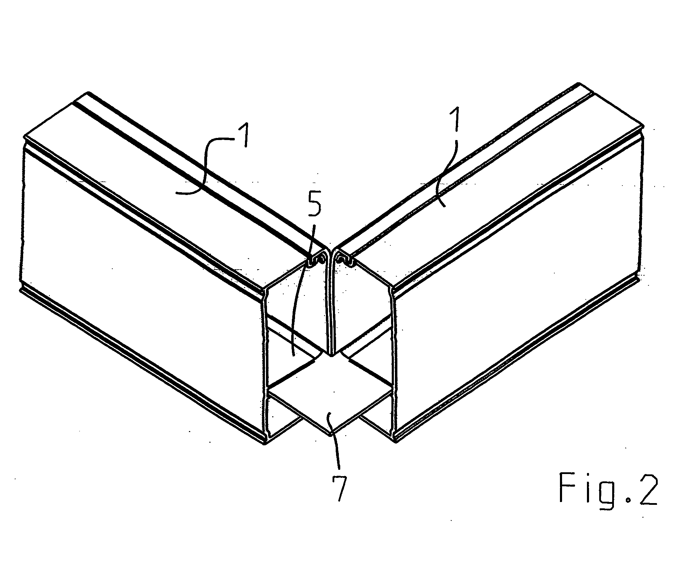

Selon un premier mode de réalisation de l'invention et comme le montrent les figures 1 et 2 des dessins annexés, le moyen de continuité est simplement constitué par une pièce 7 consistant en une équerre plate fixée par ses ailes dans le moyen de séparation longitudinale et/ou dispositif de guidage pour le clouage 5 prévu dans les goulottes 1 disposées sur les parois formant les angles.

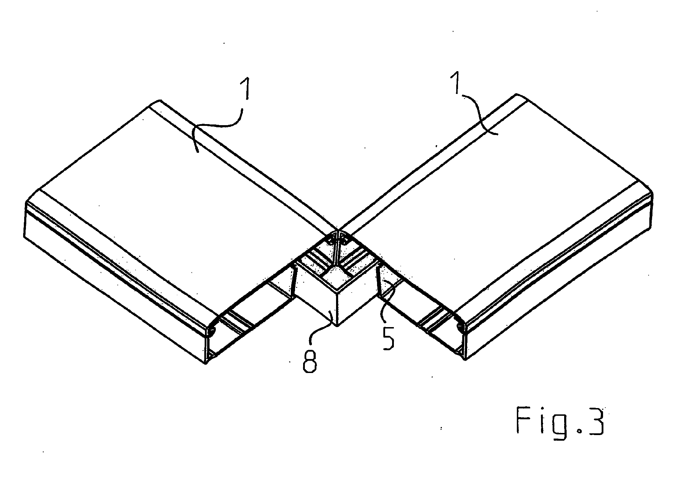

Selon une autre caractéristique de l'invention, représentée à la figure 3 des dessins annexés, le moyen de séparation longitudinale et/ou dispositif de guidage pour le clouage 5 peut coopérer avec une pièce déformable plastiquement 8 formant un moyen de continuité au niveau des jonctions droites ou angulaires. Une telle pièce 8 peut, notamment, se présenter sous forme d'une plaquette allongée de largeur correspondant au maximum à la hauteur des moyens et/ou dispositifs 5 et pouvant subir une déformation permanente dans son plan. Une telle pièce peut parfaitement s'adapter à tout type de liaison angulaire de cloison posée à plat.

Selon une variante de réalisation de l'invention, non représentée aux dessins annexés, le moyen de continuité peut également être constitué, pour la réalisation d'une continuité entre deux goulottes 1 disposées bout à bout, sous forme d'une simple pièce plane longitudinale, insérée dans les extrémités des moyens ou dispositifs 5 équipant les goulottes 1.

Il est également possible, conformément à une autre variante de réalisation de l'invention, non représentée aux dessins annexés, de constituer le moyen de continuité angulaire sous forme de deux pièces planes longitudinales insérées chacune dans une extrémité d'angle d'une goulotte 1 et se chevauchant au niveau de l'angle ou venant en contact par leur extrémité au niveau dudit angle. Une telle utilisation de deux plaquettes planes permet l'obtention de résultats comparables à ceux obtenus avec les pièces en équerre 7 (figures 1 et 2) ou déformables 8 (figure 3).

Ainsi, aussi bien dans le cas de goulottes se rejoignant sur un angle sortant que dans le cas de goulottes se rejoignant sur un angle rentrant, les moyens ou dispositifs 5 peuvent être reliés de manière à former une continuité au niveau des séparations entre les compartiments des goulottes 1, de sorte que les conducteurs disposés dans ces compartiments ne peuvent pas être déviés en passant d'une goulotte 1 à une autre goulotte 1.

Ainsi, des liaisons alignées entre goulottes successives, aussi bien angulairement que bout à bout peuvent très facilement être réalisées, la fixation desdites goulottes 1 pouvant être assurée par un opérateur seul, le moyen de continuité assurant le maintien en position d'alignement de l'extrémité correspondante de la nouvelle goulotte avec l'extrémité de la goulotte déjà posée.

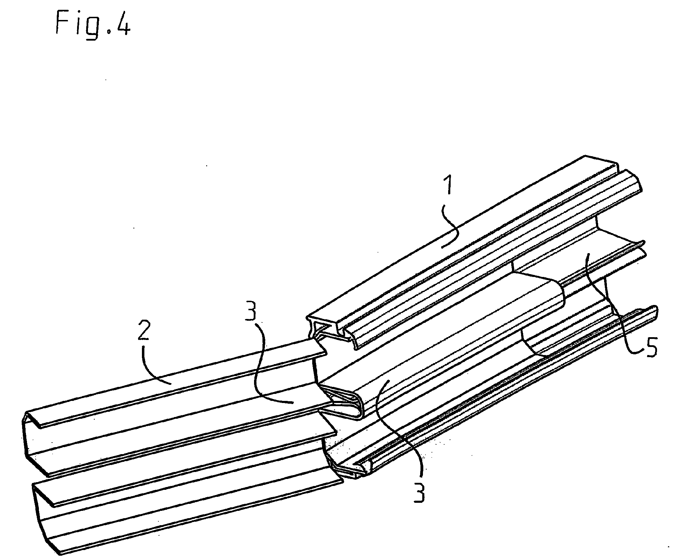

La figure 4 des dessins annexés représente une variante de réalisation de l'invention, dans laquelle une goulotte 1 est pourvue d'un moyen de séparation longitudinale et/ou dispositif de guidage pour le clouage 5 et d'un moyen de continuité 2 sous forme d'un insert destiné à être monté dans les extrémités de deux goulottes 1 à réunir, cet insert 2 présentant une première partie munie d'un élément central 3 destiné à être monté sur le moyen de séparation longitudinale et/ou dispositif de guidage pour le clouage 5 de l'extrémité de l'une des goulottes et une deuxième partie pourvue d'un moyen de séparation longitudinal 3' analogue à celui, 5, des goulottes 1, cette deuxième partie étant insérée dans l'extrémité correspondante de l'autre goulotte 1 après découpe d'une longueur correspondante du moyen de séparation longitudinale et/ou dispositif de guidage pour le clouage 5 de ladite extrémité de ladite goulotte, la continuité de la ou des séparations internes des goulottes 1 étant réalisée par insertion d'un élément en forme d'équerre plate ou d'un élément plat déformable ou encore de deux plaquettes planes se chevauchant dans les extrémités de l'élément central 3 et de la séparation longitudinale 3' des parties constitutives de l'insert 2.

Dans ce mode de réalisation, le dispositif de continuité 2 est réalisé sous forme d'une pièce moulée en deux parties assemblées par une charnière film et par les moyens de continuité décrits à propos des figures 1 à 3. Dans le cas d'un assemblage angulaire suivant un angle rentrant, l'élément central 3 s'engage dans la séparation longitudinale 3' de l'insert 2.

Dans le cas d'un angle sortant, la pièce de liaison en équerre ou deux pièces planes ou encore une pièce déformable est préférentiellement montée par pincement dans le moyen 5 et entre les parois de la séparation longitudinale 3'.

Cet insert 2 peut, en outre, facilement trouver son application dans le cadre d'une liaison bout à bout entre deux goulottes 1 successives, l'insert 2 étant alors simplement monté dans les extrémités des deux goulottes 1 successives.

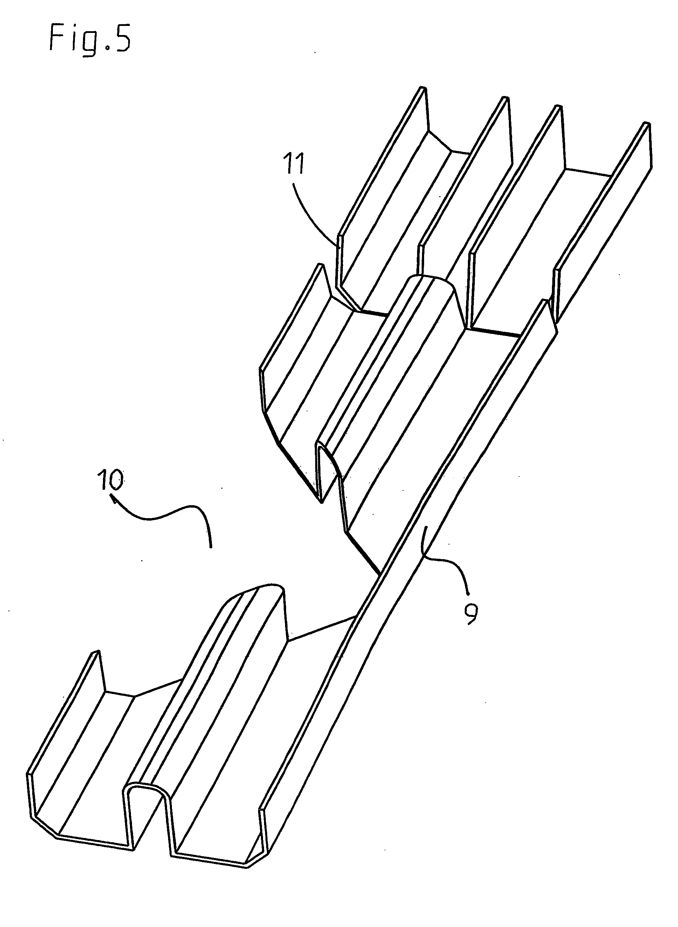

Selon une autre variante de réalisation de l'invention, et comme le montre la figure 5 des dessins annexés, le moyen de continuité peut être constitué sous forme d'un insert 9 pourvu de découpes angulaires 10, 11 s'étendant aussi bien dans le plan longitudinal (découpe 10) de l'insert 9 que dans des plans transversaux (découpe 11) dudit insert 9, 1a continuité du moyen de séparation longitudinale et/ou dispositif de guidage pour le clouage étant assurée par la prévision d'un élément central longitudinal 12 s'emboîtant sur le moyen de séparation longitudinale et/ou dispositif de guidage pour le clouage 5 de chaque extrémité des goulottes à assembler.

En effet, comme il ressort de la figure 5, un tel moyen de continuité 9 peut parfaitement s'adapter complètement sur les extrémités de deux goulottes à relier angulairement dans des plans horizontaux ou dans des plans verticaux, les changements de direction étant possibles grâce aux découpes 10 et 11, une continuité supplémentaire pouvant être assurée par l'intermédiaire des moyens décrits à propos des figures 1 à 3.

La réalisation d'une goulotte conformément à l'invention permet d'assurer dans tous les cas une continuité entre des goulottes ou des parties de goulottes alignées ou disposées sur des angles rentrants ou sortants ou encore avec un changement de direction.

En outre, du fait de la liaison réalisée au niveau de l'aboutement ou d'un changement angulaire, l'élément de liaison utilisé peut permettre la pose de la goulotte par un opérateur agissant seul, l'extrémité de la nouvelle goulotte pouvant toujours être positionnée par rapport à la goulotte déjà posée, de sorte que la fixation est parfaitement aisée.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Goulotte (1) présentant une section transversale générale en forme de U plus ou moins aplatie et pourvue d'au moins un moyen de séparation longitudinale et/ou d'un dispositif de guidage pour le clouage (5), **caractérisée en ce qu'**elle est pourvue d'au moins un moyen (7, 8, 2, 9, 12) de continuité au niveau des jonctions droites ou angulaires coopérant avec le dispositif de guidage pour le clouage (5).

2. Goulotte, suivant la revendication 1, **caractérisée en ce que** le moyen de continuité angulaire est constitué sous forme de deux pièces planes longitudinales insérées chacune dans une extrémité d'angle d'une goulotte (1) et se chevauchant au niveau de l'angle ou venant en contact par leur extrémité au niveau dudit angle.

3. Goulotte, suivant la revendication 1, **caractérisée en ce que** le moyen de continuité est simplement constitué par une pièce (7) consistant en une équerre plate (9) fixée par ses ailes dans le moyen de séparation longitudinale et/ou dispositif de guidage pour le clouage (5) prévu dans les goulottes (1) disposées sur les parois formant les angles.

4. Goulotte, suivant la revendication 1, **caractérisée en ce que** le moyen de continuité au niveau des jonctions droites ou angulaires coopérant avec le moyen de séparation longitudinale et/ou dispositif de guidage pour le clouage (5) est constitué par une pièce déformable plastiquement (8).

5. Goulotte, suivant la revendication 4, **caractérisée en ce que** la pièce (8) se présente sous forme d'une plaquette allongée de largeur correspondant au maximum à la hauteur des moyens et/ou dispositifs (5) et peut subir une déformation permanente dans son plan.

6. Goulotte, suivant la revendication 1, **caractérisée en ce que** le moyen de continuité est constitué, pour la réalisation d'une continuité entre deux goulottes (1) disposées bout à bout, sous forme d'une simple pièce plane longitudinale, insérée dans les extrémités des moyens ou dispositifs (5) équipant les goulottes (1).

7. Goulotte, suivant la revendication 1, **caractérisée en ce que** le moyen de continuité (2) est sous forme d'un insert destiné à être monté dans les extrémités de deux goulottes (1) à réunir, cet insert (2) présentant une première partie munie d'un élément central (3) destiné à être monté sur le moyen de séparation longitudinale et/ou dispositif de guidage pour le clouage (5) de l'extrémité de l'une des goulottes et une deuxième partie pourvue d'un moyen de séparation longitudinal (3') analogue à celui (5) des goulottes (1), cette deuxième partie étant insérée dans l'extrémité correspondante de l'autre goulotte (1) après découpe d'une longueur correspondante du moyen de séparation longitudinale et/ou dispositif de guidage pour le clouage (5) de ladite extrémité de ladite goulotte, la continuité de la ou des séparations internes des goulottes (1) étant réalisée par insertion d'un élément en forme d'équerre plate ou d'un élément plat déformable ou encore de deux plaquettes planes se chevauchant dans les extrémités de l'élément central (3) et de la séparation longitudinale (3') des parties constitutives de l'insert (2).

8. Goulotte, suivant la revendication 7, **caractérisée en ce que** le dispositif de continuité (2) est réalisé sous forme d'une pièce moulée en deux parties assemblées par une charnière film et par les moyens de continuité suivant l'une quelconque des revendications 2 à 6.

9. Goulotte, suivant la revendication 1, **caractérisée en ce que** le moyen de continuité est constitué sous forme d'un insert (9) pourvu de découpes angulaires (10, 11) s'étendant aussi bien dans le plan longitudinal (découpe 10) de l'insert (9) que dans des plans transversaux (découpe 11) dudit insert (9), la continuité du moyen de séparation longitudinale et/ou dispositif de guidage pour le clouage étant assurée par la prévision d'un élément central longitudinal (12) s'emboîtant sur le moyen de séparation longitudinale et/ou dispositif de guidage pour le clouage (5) de chaque extrémité des goulottes à assembler.
